# EUROPEAN PATENT APPLICATION

(11) **EP 2 949 569 A1**
(43) Date of publication of application: **02.12.2015**
(21) Application number: 14169834.0
(22) Date of filing: 26.05.2014
(51) Int. Cl.: B63B 35/71, A63B 22/00, B60N 2/70

(54) **A rowing seat**

(71) Applicant: Citius Remex ApS, 1561 Copenhagen V (DK)
(72) Inventor: Barsoe, Jacob Jepsen, 2700 Brønshøj (DK); Jensen, Steffen Bonde, 1561 Copenhagen V (DK)
(74) Representative: Hoffmann Dragsted A/S

(57) **Abstract**

The present invention relates to a rowing seat (1) for rowing and kayaking boats and exercise equipment, comprising a first face (2) adapted to support and carry a user, a second face (3) arranged opposite the first face (2), a first end (4) and a second end (5), a first side (6) and a second side (7), and a longitudinal axis (8) extending between the first end (4) and the second end (5), wherein the first face (2) comprises a middle section (9) arranged substantially between the first and second sides and extending from the first end towards the second end with a length of at least 8 cm, the middle section (9) having a substantially convex support face (10) extending along the longitudinal axis (8), the support face being adapted to support at least 50% of the user's weight during use of the rowing seat. The present invention also relates to a rowing, kayaking or exercise system comprising a rowing seat according to the present invention.

## Description

### Field of the invention

The present invention relates to a rowing seat for rowing and kayaking boats and exercise equipment. The present invention also relates to a rowing, kayaking or exercise system comprising a rowing seat according to the present invention.

### Background art

The tuber ischiadicum in Latin, also known as the sitting bone, is a large swelling posteriorly on the superior ramus of the ischium. It marks the lateral boundary of the pelvic outlet. When sitting down, the weight is frequently placed upon the ischial tuberosity. The gluteus maximus covers it in the upright posture, but leaves it free in the seated position.

Thus, when a rower is rowing, either in a rowing boat or in a rowing machine, he or she is sitting on a rowing seat, which is adapted to be moved back and forth during the rowing strokes. During a rowing stroke, the rower has a certain movement in relation to the rowing seat, which again may exert loads on the tuber ischiadicum, the areas around it and its nerves.

When elite rowers, such as the present inventors, whom together have won several medals in the World and European Championships as well as in the Olympics, are training and competing, they obviously do have many rowing strokes which are repeated. These many repeating rowing strokes exert a high impact on the tuber ischiadicum, which may influence on the rower's training, physical condition and preparation for competition. However, the above-mentioned discomfort is also experienced by less trained rowers using the known rowing seats.

Ergonomic rowing seats are known, for improving the seating comfort for the rowers. However, the known rowing seats available today in the market place do not overcome the above-mentioned disadvantages and problems for the rower.

### Summary of the invention

It is an object of the present invention to wholly or partly overcome the above disadvantages and drawbacks of the prior art. More specifically, it is an object to provide an improved rowing position, increasing the comfort and limiting the irritation of the sciatic nerves, making the user capable of rowing for a longer period of time.

In addition, it is an object of the present invention to provide an intelligent rowing seat for monitoring and measuring different parameters performed by and exerted on the rowing seat.

The above objects, together with numerous other objects, advantages and features, which will become evident from the below description, are accomplished by a solution in accordance with the present invention by a rowing seat for rowing and kayaking boats and exercise equipment, comprising
- a first face adapted to support and carry a user,
- a second face arranged opposite the first face,
   a first end and a second end,
- a first side and a second side, and
- a longitudinal axis extending between the first end and the second end,
wherein the first face comprises a middle section arranged substantially between the first and second sides and extending from the first end towards the second end with a length of at least 8 cm, the middle section having a substantially convex support face extending along the longitudinal axis, the support face being adapted to support at least 50% of the user's weight during use of the rowing seat.

The present invention is breaking with many years of tradition within the rowing sport with regard to the design of the rowing seat, in that the rowing seat according to the present invention has the middle section having a support face, which support face absorbs a major part of the user's weight. Hereby, the load on tuber ischiadicum, gluteus maximus and the sciatic nerve is minimised and relieved.

The support face may be adapted to support more than 70% of the user's weight.

Moreover, the first face may further comprise a first section arranged between the middle section and the first side and a second section arranged between the middle section and the second side, the first and second sections being arranged lower than the support face of the middle section, the first and second sections being adapted for providing partial support for a tuber ischiadicum of the user.

Said first and second sections may be arranged symmetrically on each side of the middle section.

Also, the first and second sections may comprise one or several holes.

Further, the first and second ends may have a width which is larger than 20 cm.

Additionally, the first and second sections may each have a concave second support face.

The concave support second faces may be converging into the convex support face.

Furthermore, the convex support face may have a curved extension perpendicular to the longitudinal axis, the curved extension having an apex, and the curved extension having the apex may have a radius which is larger than 1.5 cm.

Additionally, the radius may vary along the longitudinal axis.

Moreover, the convex support face may have width which is larger than 3 cm when seen in a top view.

Also, the width of the convex support face may vary along the longitudinal axis.

In addition, the height of the middle section may decrease from the first end towards the second end.

Additionally, the height of the middle section may vary along the longitudinal axis.

Further, the first face may comprise a concave portion arranged between the middle section and the second end, the concave portion being adapted to provide room for the coccyx of the user.

The first face may comprise a first projection extending from the middle section to divide the first section from the concave portion and a second projection extending from the middle section to divide the second section from the concave portion.

Furthermore, the first face may comprise a first indentation and a second indentation, each arranged at the first end on opposite sides of the middle section.

The rowing seat as described may be made from a rigid, a semi-rigid or a soft material or a combination thereof.

Also, the material may comprise carbon-reinforced resin.

Moreover, the material may be a polymer, such as ethylene vinyl acetate.

Furthermore, the rowing seat may have embedded stringers.

In addition, the rowing seat may be releasable or securely connected with the boat, kayak or exercise equipment.

The rowing seat as described above may further comprise connection means adapted to connect the rowing seat to the boat, kayak or exercise equipment.

Said connection means may be arranged on the second face, on the first end, on the second end, on the first side and/or on the second side.

Further, the connection means may be adapted to engage or be attached to corresponding connection means arranged on the boat, kayak or exercise equipment.

Also, the connection means may comprise hook and loop attachments, magnets, a click system, tape, adhesives, bolts and nuts, a skirt, tongue and groove attachments, elastic bands, or the like.

Additionally, the connection means may be embedded in the rowing seat.

The first face may comprise friction-enhancing means for enhancing the friction between the user and the rowing seat.

Moreover, a plurality of channels, apertures and/or grooves may be arranged in connection with the first face for venting between the user and the rowing seat and for leading fluid away from the seat.

Also, an accelerometer may be connected with the rowing seat.

Furthermore, the accelerometer may be detachably connected.

In addition, the accelerometer may be embedded in the rowing seat.

Said accelerometer may comprise a power supply.

Further, a pressure sensor may be arranged in the rowing seat.

The accelerometer and/or pressure sensor may be connected with a transmitter adapted to wirelessly transmit data from the accelerometer and/or the pressure sensor to a receiver.

Moreover, the transmitter may communicate via a short-range wireless data communication, such as Bluetooth^{™}, WLAN, Radio Frequency (RF), HomeRF or IrDA.

The present invention also relates to a rowing, kayaking or exercise system comprising a rowing seat as described above.

Such rowing, kayaking or exercise system may further comprise a storage unit.

Further, the storage unit may be adapted to store data received from the rowing seat, so that the data may be assessed and analysed later.

The rowing, kayaking or exercise system according to the present invention may further comprise a display to display data measured from the accelerometer and/or pressure sensor.

Furthermore, the rowing, kayaking or exercise system according to the present invention may comprise a rowing boat, a kayak or exercise equipment.

Said exercise equipment may be a rowing machine or a kayaking machine.

The present invention also relates to a method for optimising a rowing training session, comprising the steps of:
- providing a rowing seat as described above,
- measuring an acceleration of the user's seat,
- displaying the acceleration,
- comparing the acceleration with a predetermined, intended acceleration rate,
- adjusting the user's stroke so that the actual acceleration is similar to the intended acceleration rate.

### Brief description of the drawings

The invention and its many advantages will be described in more detail below with reference to the accompanying schematic drawings, which for the purpose of illustration show some non-limiting embodiments and in which
Fig. 1 shows a rowing seat according to the present invention,
Fig. 2 shows a cross-sectional view taken along the longitudinal axis of the rowing seat,
Fig. 3 shows a cross-sectional view taken along the B-B of Fig. 1,
Fig. 4 shows the rowing seat partly from below,
Fig. 5-7 show different embodiments of connecting means,
Fig. 8 shows a rowing boat in a top view,
Fig. 9 shows a kayak in a top view, and
Figs. 10-13 show a rowing machine and a sequence of a rowing stroke.

All the figures are highly schematic and not necessarily to scale, and they show only those parts which are necessary in order to elucidate the invention, other parts being omitted or merely suggested.

### Detailed description of the invention

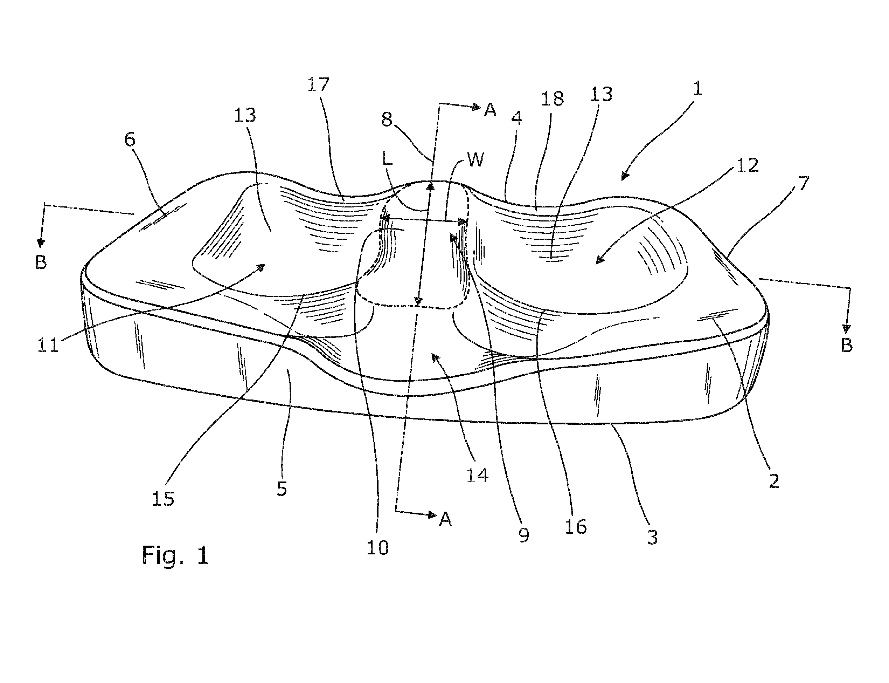

Fig. 1 shows a rowing seat 1 according to the invention. The rowing seat 1 according to the invention may be used in connection with rowing boats or kayaks. In addition, the rowing seat 1 may also be used for exercise equipment such as rowing machines and kayaking machines.

The rowing seat 1 comprises a first face 2 adapted to support and carry a user and a second face 3 arranged opposite the first face 2. The rowing seat 1 further comprises a first end 4 and a second end 5, and a first side 6 and a second side 7, and a longitudinal axis 8 extending between the first end 4 and the second end 5. In this embodiment, the rowing seat 1 has a substantially rectangular shape. However, the rowing seat may, in other embodiments, have other designs and shapes.

According to the inventive idea, the first face 2 furthermore comprises a middle section 9 arranged substantially between the first side 6 and second side 7 and extending from the first end 4 towards the second end 5 with a length L of at least 8 cm, the middle section 9 having a substantially convex support face 10 extending along the longitudinal axis 8, the support face being adapted to support at least 50% of the user's weight during use of the rowing seat. The rowing seat 1 according to the present invention has properties and a design that are not known from other rowing seats today. Especially the design and size of the support face 10 ensure that the pressure exerted on gluteus maximus during use of the rowing seat is distributed in a more ergonomically optimal way, so that the sciatic nerves are stressed less when the user is sitting on the rowing seat for a longer period of time.

Moreover, the convex support face 10 has a width W which is larger than 3 cm when seen in a top view. Also, the width W of the convex support face 10 may vary along the longitudinal axis as shown in Fig. 1.

Moreover, the first face 2 comprises a first section 11 arranged between the middle section 9 and the first side 6 and a second section 12 arranged between the middle section 9 and the second side 7. The first section 11 and second section 12 are arranged lower than the support face 10 of the middle section 9, the first and second sections 11, 12 being adapted to provide partial support for a tuber ischiadicum of the user. In the shown embodiment, the first and second sections 11, 12 are arranged symmetrically on each side of the middle section 9.

In addition, the first and second sections 11, 12 each have a concave second support face 13. Advantageously, the support face 10 is so high in relation to the second support faces 13 of the first and second sections 11, 12 that the main load from the user of the rowing seat 1 will be distributed to the support face 10 of the middle section 9 rather than to the second support faces 13 as in the known rowing seats.

Furthermore, the first face 2 also comprises a concave portion 14 arranged between the middle section 9 and the second end 5, the concave portion 14 being adapted to provide room for the coccyx of the user. In other embodiments, the portion behind the middle section may be cut away in order to obtain the same effect.

In the shown embodiment in Fig. 1, the first face 1 comprises a first projection 15 extending from the middle section 9 to divide the first section 11 from the concave portion 14 and a second projection 16 extending from the middle section 9 to divide the second section 12 from the concave portion 14. The first and second projections 15, 16 also assist in relieving the pressure on tuber ischiadicum and thereby create an effective sitting position when exercising rowing.

The projections 15, 16 and the middle section 9 of the rowing seat improve the overall sitting position of the user, and therefore it creates a more effective use of gluteus maximus and the muscles of cingulum membri inferioris than the known rowing seats. This has a positive effect on the sitting position during the rowing stroke and the effect of the rowing stroke.

Furthermore, the first face 2 comprises a first indentation 17 and a second indentation 18, each arranged at the first end 4 on opposite sides of the middle section 9, providing room for the user's thighs.

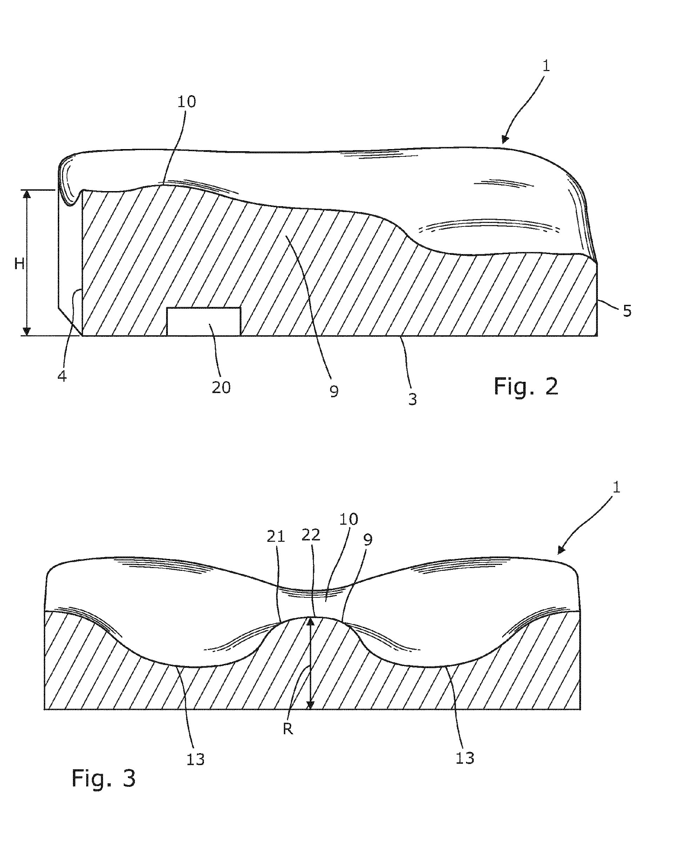

In Fig. 2, the rowing seat 1 is shown in a cross-sectional view taken along the longitudinal axis and the line A-A as shown in Fig. 1. As shown in Fig. 2, a height H of the middle section 9 may vary along the longitudinal axis. The height H is, in this embodiment, taken from the second face 3 to the support face 10 at a given position along the longitudinal axis. Also, as can be seen on Fig. 2, the height H of the middle section decreases from the first end 4 towards the second end 5, so that the weight and loads from the user are distributed in an ergonomically optimal manner, providing an enhanced seating comfort. Furthermore, a pressure sensor 20 may be embedded in the rowing seat 1. The pressure sensor will be described further below.

In Fig. 3, the rowing seat 1 is shown in a cross-sectional view taken along the line B-B as shown in Fig. 1. As shown in Fig. 3, the concave support second faces 13 are converging into the convex support face 10. Furthermore, the convex support face 10 may have a curved extension 21 perpendicularly to the longitudinal axis, the curved extension 21 having an apex 22, and the curved extension 21having the apex 22 having a radius R which is larger than 1.5. The curved extension 21 may substantially be the same as the width W of the middle section and support face 10, so that the load and weight of the gluteus maximus may be distributed in an ergonomic manner. Thus, at present, it is preferred that the support face 10 is slightly curved and that this face converges into the two concave second support faces 13 as shown in Fig. 3. The height difference between the support face 10 and the second support faces 13 may also be seen in Fig. 3. Indeed, the radius may vary along the longitudinal axis so that the weight and loads from the user are distributed in an ergonomically optimal manner, providing an enhanced seating comfort.

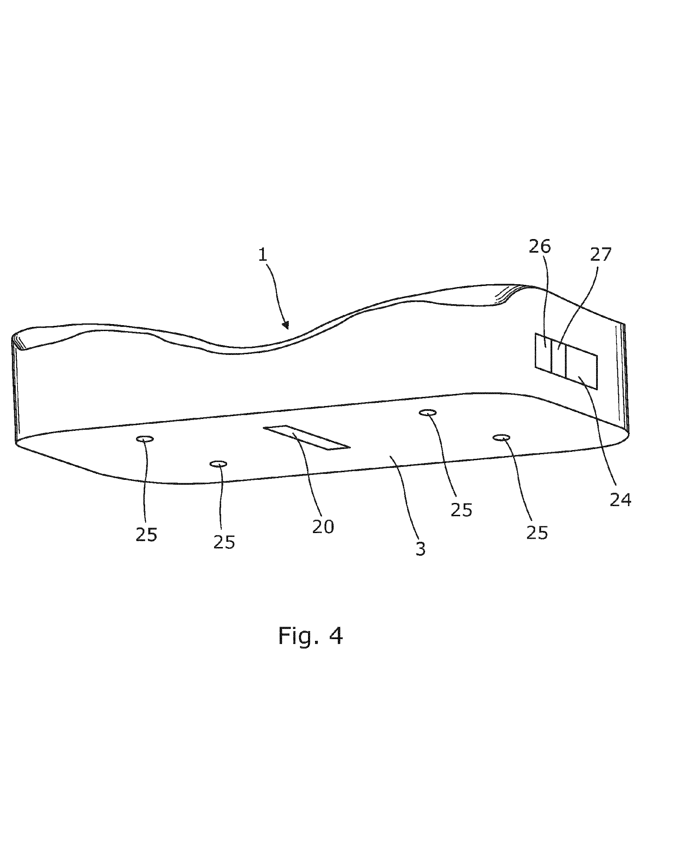

In Fig. 4, the rowing seat 1 is shown partly from below. The second face 3 is, in this embodiment, shown as a flat surface. The second face 3 may comprise connection means 25, here in the form of embedded nuts, wherein bolts may be screwed, so that the rowing seat may be connected to a boat, kayak or exercise equipment. Other embodiments of connection means will be described further below.

As described above, a pressure sensor 20 may be incorporated in the rowing seat 1. The pressure sensor 20 may be adapted to measure the load exerted from the user during a rowing stroke on the rowing seat. Additionally, a plurality of pressure sensors may be arranged on the rowing seat 1 for again measuring the load and pressure exerted on the rowing seat during the rowing stroke. The pressure exerted on the rowing seat provides the user with information on how expediently the mass of the body is used. If the mass of the body is used properly, the pressure will be in the interval between 0-100% of the user's weight. If the body mass is used incorrectly, the pressure will be in the interval between 0-140% of the user's weight. When 140% of the body mass is pressed into the seat, the rowing boat will be pressed further down into the water, thereby increasing the drag from the surface covered by water and thus slowing down the boat speed. Proper use of mass is a key element in rowing efficiently.

Also, an accelerometer 24 is connected with the rowing seat 1. The purpose of the accelerometer 24 is to provide the user with technical equipment to improve their technique by measuring the acceleration speed of the rowing seat 1 during a rowing stroke and during the recovery phase.

The accelerometer 24 may be a detachably connected rowing seat or it may be incorporated or embedded in the rowing seat. Furthermore, the accelerometer may comprise a power supply 26 such as a battery.

The accelerometer 24 and/or pressure sensor 20 may be connected with a transmitter 27 adapted to wirelessly transmit data from the accelerometer 24 and/or the pressure sensor 20 to a receiver (not shown). Moreover, the transmitter 27 may communicate via a short-range wireless data communication, such as Bluetooth^{™}, WLAN, Radio Frequency (RF), HomeRF or IrDA.

Acceleration data can be used to guide the user, i.e. a rower, with regard to how to coordinate legs, trunk and arms during the drive of the stroke. The speed of the legs is a key element in mastering the most efficient stroke. High leg speed is one of the elements that differentiate good rowers from excellent rowers.

When more crew members are using a rowing seat according to the present invention with an accelerometer installed, it is possible to compare each set of data from the single accelerometers with each other. Coaches and rowers might be able to have a tool to help them synchronise a crew's drive and recovery phase by means of the data received.

Furthermore, the rowing seat 1 may comprise a cradle or other attachment means adapted for connecting a mobile device, such as a cellular phone or a smartphone, to the rowing seat. The mobile device may comprise one or more inertial sensors, for instance an accelerometer, a gyroscope etc., adapted to measure the acceleration of the rowing seat. The data from the sensors may be stored in the mobile device or it may be transmitted to another unit using the data communication unit of the mobile device.

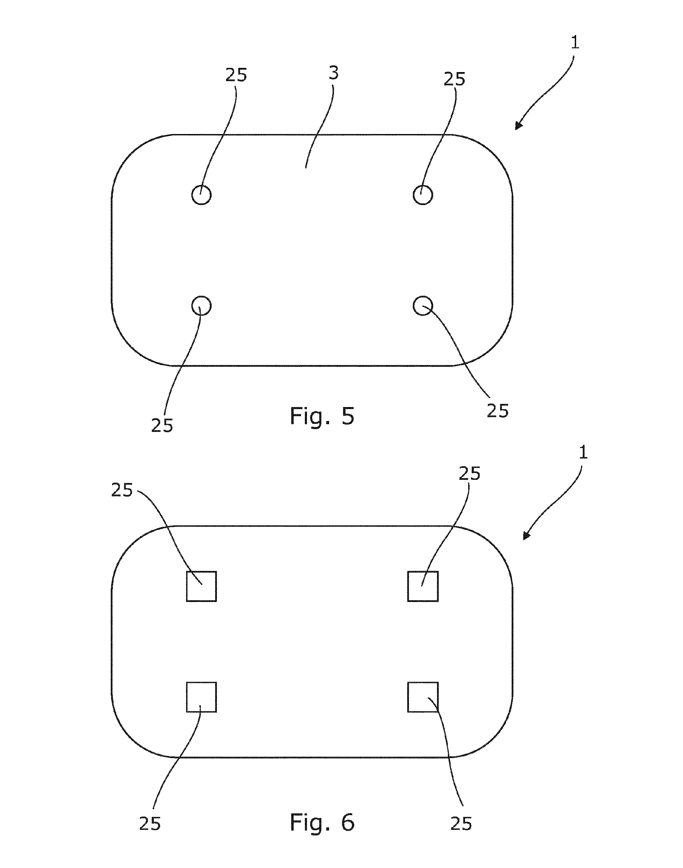

In Figs. 5-7, different embodiments of connection means for connecting the rowing seat with a boat (or a sliding carrier or wheels), a kayak or exercise equipment are shown. The rowing seat 1 may either be releasable or securely connected with the boat, kayak or exercise equipment.

The connection means may be arranged on the second face 3, on the first end, on the second end, on the first side and/or on the second side of the rowing seat 1. Further, the connection means may be adapted to engage or be attached to corresponding connection means arranged on the boat, kayak or exercise equipment.

In Fig. 5, the rowing seat 1 is shown from below, so that the second face 3 is visible. The connection means 25 is, in this embodiment (as in Fig. 4 above), nuts inserted or embedded in the second surface. The nuts are adapted to be connected with bolts and may for instance be used to replace an existing seat from a rowing machine.

In Fig. 6, the rowing seat 1 is shown in the same manner as in Fig. 5. In this embodiment, the connection means 25 are magnets arranged on the second face 3. By applying the magnets, the rowing seat 1 may easily be detached from the boat, kayak or exercise equipment.

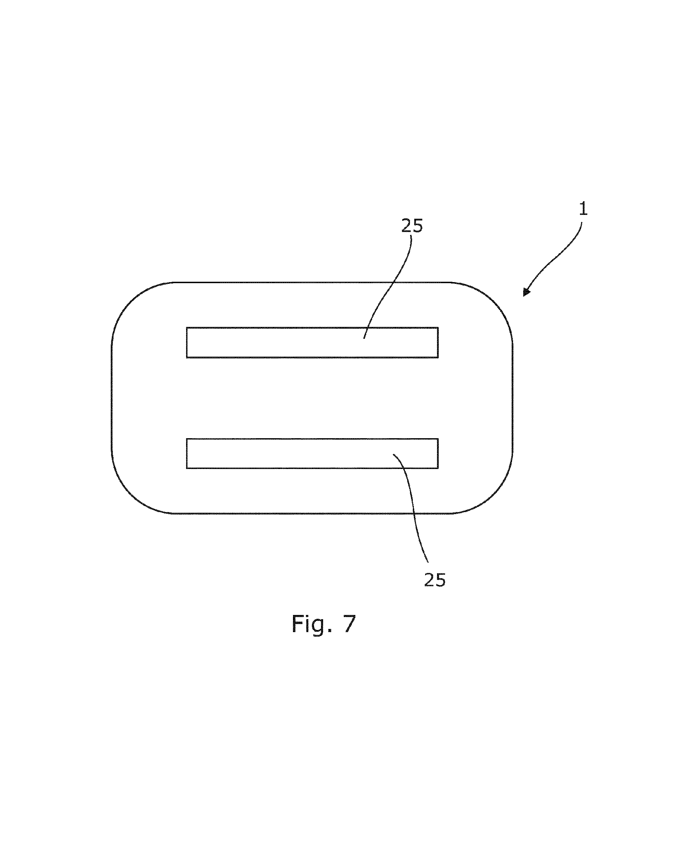

In Fig. 7, another embodiment of the connection means 25 is shown. In this embodiment, hook and loop attachments are used.

In other not shown embodiments, the connection means may comprise a click system, tape, adhesives, a skirt, tongue and groove attachments, elastic bands, or the like. The click system may for instance be similar to those used for racing bikes etc. The click system is made of a bolt with a clamping entity and a piece of rubber. The bolt fits to the product and to Concept2 rowing seats. The bolt has to be turned into the hole in the product or the Concept2^{™} seat, meaning that it is possible to mount both seats to a rowing machine.

The rowing seat as described above may be made from a rigid, a semi-rigid or a soft material or a combination thereof.

For instance, the material may comprise carbon-reinforced resin, which may provide a thin and very rigid rowing seat.

Moreover, the material may be a polymer, such as ethylene vinyl acetate (EVA). EVA material is characterised as a material which is hard when temperatures are relatively low (less than 40 degrees Celsius) but capable of moulding under high temperatures (over 80 degrees Celsius). The EVA material is available in different hardness measured in shores. Furthermore, EVA material is a lightweight material available in many different colours. If the rowing seat is made of soft material, it may be advantageous to have embedded stringers.

In addition, the rowing seat may be made of a first material, for instance EVA material having a first stiffness (shore) and rigidity, and a second material, for instance having a second stiffness (shore) and rigidity, the second material being closest to the first face, and the first stiffness being larger than the second stiffness.

Furthermore, the rowing seat 1 may be coated with a surface other than EVA material for design reasons, and/or to improve the friction between the user and the rowing seat. The first face may for instance be imprinted with a flag, so that when the users are carrying their boat to the water, for instance during competition, the audience may easily detect which country the different competitors represent.

Moreover, a plurality of channels, apertures and/or grooves (not shown) may be arranged in connection with the first face for venting between the user and the rowing seat and for leading fluid away from the seat.

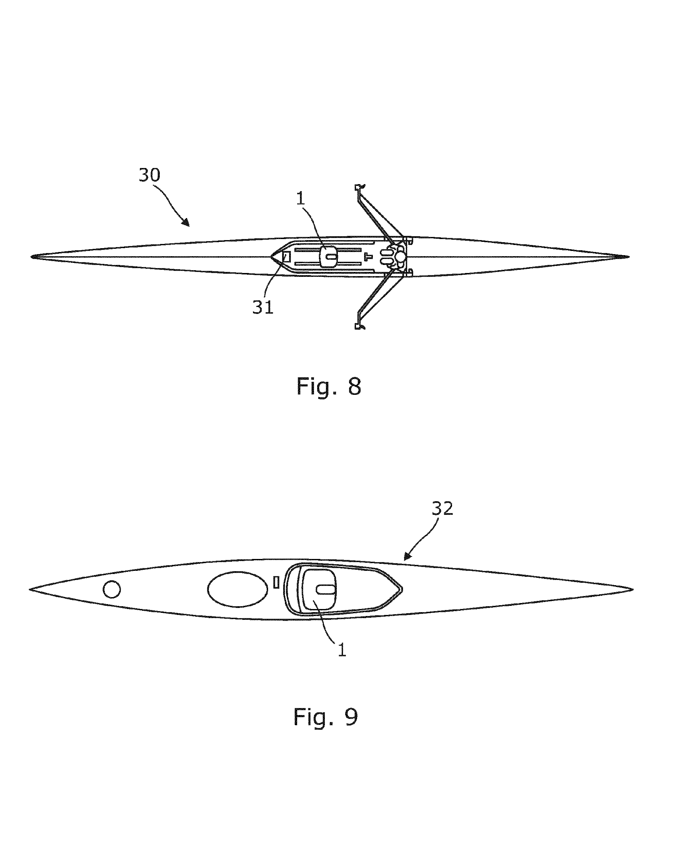

A rowing boat 30 is shown schematically in a top view in Fig. 8. The rowing boat may be many types of boats, such as outriggers, inriggers, Edon boats, etc. The rowing boat 30 comprises the rowing seat 1 according to the invention. The rowing boat 30 may comprise a storage unit 31 adapted to store data received from the rowing seat, so that the data may be assessed and analysed later. The data from the rowing seat 1 may also be transmitted directly to a coach who follows the rowing boat so that the coach may advise the rowers. The data might also be transmitted to a technical device placed in the boat, so that the user is able to receive the data instantly. The data might be transmitted to different devices such as but not limited to StrokeBoxes^{™}, cellphones, tablets, watches, glasses, or other mobile devices.

As shown in Fig. 9, the rowing seat 1 may also be used in a kayak 32.

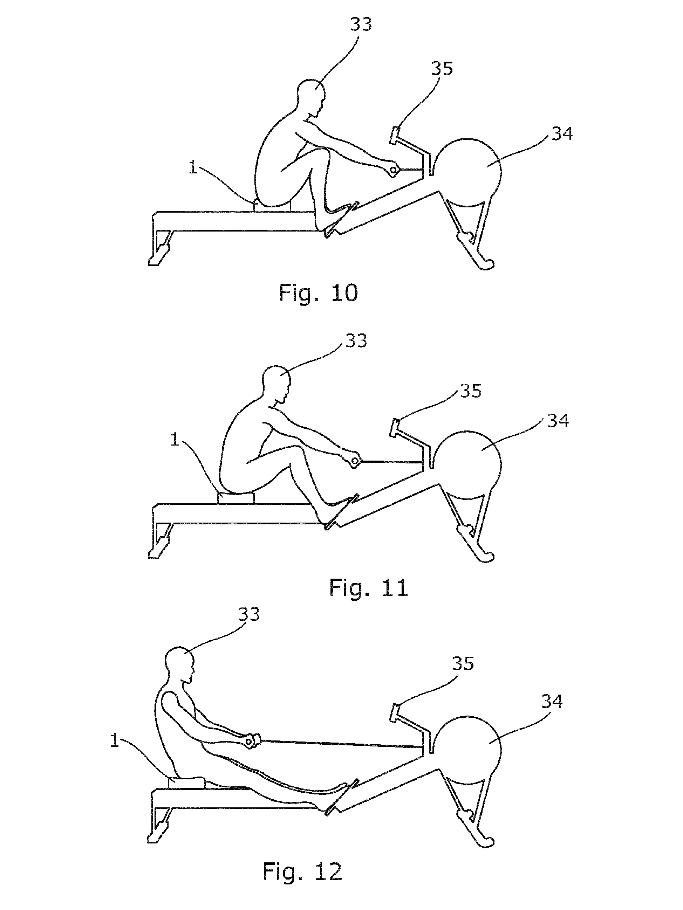

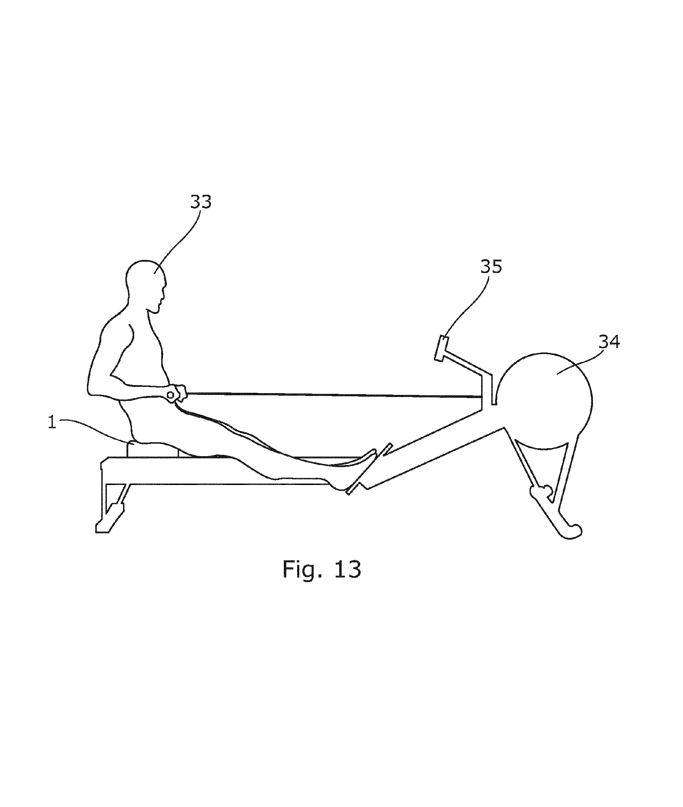

In Figs. 10-13, a sequence of a rowing stroke of a user 33 on a rowing machine 34 is shown. The rowing machine 34 comprises the rowing seat 1 according to the present invention. The rowing stroke is a cyclical movement which can be split into different phases: The catch (Fig. 10), the stroke (Figs. 11-12), the finish (Fig. 13) and the recovery phase where the rower moves from the finish to the catch to prepare for the next rowing stroke.

The catch is executed by a fast movement on the legs, activating the gluteus maximus and lifting the rower's body weight from the rowing seat 1. The catch is followed by an opening in the angle between the legs and the chest, pushing the bag towards the bow of the boat, still using the legs, but now activating the trunk. In the next phase, the legs and trunk are still active, now supported by a pull in the handle, activating the arms and the abdominal wall. The stroke is finished by a turn from bow to stern using the arms, trunk and abdomen, leading the rower to the recovery phase.

In the catch, the vertical seat force is around 40 % of the body mass (Fig. 10) followed by a boat acceleration phase where the vertical seat force is almost zero (Fig. 11). The third phase is characterised by a vertical seat force increasing from around 0 to up to 140% of the body mass, meaning that a person weighing 80 kilograms is putting approximately 112 kilograms on the seat in the finish.

Furthermore, the rowing, kayaking or exercise system according to the present invention may further comprise a display 35 to display data measured from the accelerometer and/or pressure sensor. The display 35 is for instance shown on the rowing machine 34 in Figs. 10-13. However, it may also be arranged on the rowing boat or kayak.

Although the invention has been described in the above in connection with preferred embodiments of the invention, it will be evident for a person skilled in the art that several modifications are conceivable without departing from the invention as defined by the following claims.

## Claims

1. A rowing seat (1) for rowing and kayaking boats and exercise equipment, comprising
- a first face (2) adapted to support and carry a user,
- a second face (3) arranged opposite the first face,
- a first end (4) and a second end (5),
- a first side (6) and a second side (7), and
- a longitudinal axis (8) extending between the first end and the second end, wherein the first face (2) comprises a middle section (9) arranged substantially between the first and second sides (6, 7) and extending from the first end (4) towards the second end (5) with a length of at least 8 cm, the middle section (9) having a substantially convex support face (10) extending along the longitudinal axis, the support face (10) being adapted to support at least 50% of the user's weight during use of the rowing seat.

2. A rowing seat (1) according to claim 1, wherein the first face (2) further comprises a first section (11) arranged between the middle section (9) and the first side (6) and a second section (12) arranged between the middle section (9) and the second side (7), the first and second sections being arranged lower than the support face (10) of the middle section, the first and second sections being adapted for providing partial support for a tuber ischiadicum of the user.

3. A rowing seat (1) according to claim 2, wherein the first and second sections each having a concave second support face (13).

4. A rowing seat (1) according to claim 3, wherein the concave support second faces (13) are converging into the convex support face (10).

5. A rowing seat (1) according to claim 1, wherein the convex support face (10) has a curved extension (21) perpendicular to the longitudinal axis (8), the curved extension having an apex (22), and wherein the curved extension having the apex has a radius which is larger than 1.5 cm.

6. A rowing seat (1) according to any of the preceding claims, wherein the convex support face (10) has width which is larger than 3 cm when seen in a top view.

7. A rowing seat (1) according to any of the preceding claims, wherein the first face (2) comprises a concave portion (14) arranged between the middle section (9) and the second end (5), the concave portion (14) being adapted to provide room for the coccyx of the user.

8. A rowing seat (1) according to any of the preceding claims, wherein the rowing seat is made from a rigid, a semi-rigid or a soft material or a combination thereof.

9. A rowing seat (1) according any of the preceding claims, wherein the rowing seat is releasable or securely connected with the boat, kayak or exercise equipment.

10. A rowing seat (1) according to claim 9, further comprising connection means (25) adapted to connect the rowing seat to the boat, kayak or exercise equipment.

11. A rowing seat (1) according to any of the preceding claims, wherein an accelerometer (24) is connected with the rowing seat.

12. A rowing seat (1) according to any of the preceding claims, wherein a pressure sensor (20) is arranged in the rowing seat.

13. A rowing, kayaking or exercise system comprising a rowing seat (1) according to any of the preceding claims.

14. A rowing, kayaking or exercise system according to claim 13, wherein the system comprises a rowing boat (30), a kayak (32) or exercise equipment (34).

15. A rowing, kayaking or exercise system according to claim 13, wherein the exercise equipment is a rowing machine (34) or a kayaking machine.
